# EUROPÄISCHE PATENTSCHRIFT

(11) **EP 3 584 663 B1**
(45) Veröffentlichungstag und Bekanntmachung des Hinweises auf die Patenterteilung: **09.03.2022**
(21) Anmeldenummer: 19178535.1
(22) Anmeldetag: 05.06.2019
(51) Int. Cl.: G05D 1/02

(54) **VERFAHREN ZUR AUTOMATISCHEN QUERFÜHRUNG EINES FOLGEFAHRZEUGS IN EINEM FAHRZEUG-PLATOON**
METHOD FOR AUTOMATIC TRANSVERSE GUIDANCE OF A FOLLOW VEHICLE IN A VEHICLE PLATOON
PROCÉDÉ DE GUIDAGE TRANSVERSAL AUTOMATIQUE D'UN VÉHICULE SUIVEUR DANS UN PELOTON DE VÉHICULES

(30) Priorität: 20.06.2018 DE 102018114808
(43) Veröffentlichungstag der Anmeldung: 25.12.2019
(73) Patentinhaber: MAN Truck & Bus SE, 80995 München (DE)
(72) Erfinder: Strauß, Peter, 80801 München (DE); Schwertberger, Walter, 82278 Althegnenberg (DE); Gebauer, Oliver, 85247 Schwabhausen (DE)
(74) Vertreter: v. Bezold & Partner Patentanwälte - PartG mbB

(56) Entgegenhaltungen:
- DE-A1-102010 020 984
- DE-A1-102012 208 256
- DE-A1-102016 204 593

## Beschreibung

Die Erfindung betrifft ein Verfahren zur automatischen Querführung eines Folgefahrzeugs in einem Fahrzeug-Platoon. Insbesondere betrifft die Erfindung ein Verfahren zur Bestimmung eines Fahrspurreferenzverlaufs (Spurverlaufs) zur Stabilisierung einer automatischen Querführung eines oder mehrerer Folgefahrzeuge in einem Fahrzeug-Platoon.

Beim Platooning findet ein automatisiertes Folgen eines Führungsfahrzeugs durch eines oder mehrere Folgefahrzeuge in geringem Abstand in einer Fahrzeugkolonne bei elektronischer Kopplung der Fahrzeuge statt. Die Automatisierung und Kommunikation zwischen den Fahrzeugen ermöglicht das Fahren in äußerst geringen Abständen zwischen den Platoonteilnehmern.

Herkömmliche Verfahren zur automatisierten Querführung heutiger Kraftfahrzeuge basieren in erheblichem Maß auf der sensorgestützten Erfassung und Verfolgung von Spurmarkierungen. Da diese insbesondere beim Platooning jedoch durch die Sichtverhältnisse beim Folgen in geringem Abstand sensorisch häufig nur unzureichend oder gar nicht erfasst werden können, sind heutige Platoon-Querregelungen häufig in Form einer Objektfolgeregelung umgesetzt, bei der die Querregelungsstrategie darin besteht, das eigene Fahrzeug durch geeignete Lenkeingriffe auf die Mitte des Hecks des jeweiligen Vorderfahrzeugs auszurichten.

Hierdurch können grundsätzlich zwei Nachteile bestehen. Zum einen können sich Pendelbewegungen der Trailer bzw. Fahrzeuganhänger der beteiligten Fahrzeuge von vorn nach hinten durch die Trägheiten der Fahrzeugquerbewegung verstärken. Anderseits kann bei Durchführen eines Spurwechsels durch ein Führungsfahrzeug oder vorausfahrendes Fahrzeug des Fahrzeug-Platoons, das gesamte nachfolgende Platoon diesem Spurwechsel folgen. Der Fahrer des spurwechselnden Fahrzeugs muss daher sicherstellen, dass auf der Nachbarspur ein Spurwechsel auch für mehrere nachfolgende Platoon-Fahrzeuge gefahrlos möglich ist, was mit zunehmender Länge eines Platoons zunehmend anspruchsvoll ist. Diese Problematik könnte durch eine sensorische Rückraumüberwachung mit Freiraumerkennung entschärft werden, was jedoch mit erhöhtem technischen Aufwand und zusätzlichen Kosten verbunden wäre.

Zusätzlich ist aus der DE 10 2014 002 114 A1 ein Verfahren zum Betrieb eines zur wenigstens teilweise automatischen Fahrzeugführung ausgebildeten Fahrzeugsystems eines Kraftfahrzeugs bekannt. Ein Längsführungseingriff und ein Querführungseingriff werden unter Berücksichtigung von die Umgebung des Kraftfahrzeugs beschreibenden Umfelddaten des Kraftfahrzeugs ermittelt. Durch Auswertung der Umfelddaten wird eine statistisch beschreibende Kolonneninformation einer dem Kraftfahrzeug vorausfahrenden Kolonne ermittelt. Die Ermittlung des Querführungseingriffs und des Längsführungseingriffs erfolgt unter Berücksichtigung der Kolonneninformation.

Die DE 10 2012 208256 A1 offenbart ein Verfahren zum autonomen Nachführen eines Folgefahrzeugs auf der Spur eines Leitfahrzeugs. Vom Leitfahrzeug werden bis zu einem Ende des autonomen Nachführens mittels Fahrzeug-zu-X-Kommunikation erste Koordinationsinformationen zur Koordination des autonomen Nachführens an das Folgefahrzeug gesendet. Zudem werden zweite Koordinationsinformationen zur Koordination des autonomen Nachführens mittels Umfeldsensoren des Folgefahrzeugs auf Basis von Fahrbewegungen des Leitfahrzeugs erfasst. Die ersten und die zweiten Koordinationsinformationen werden vom Folgefahrzeug abgeglichen, wobei bei übereinstimmendem Abgleichsergebnis das den ersten und zweiten Koordinationsinformationen entsprechende autonome Nachführen ausgeführt wird und wobei bei abweichendem Abgleichsergebnis das autonome Nachführen beendet wird.

Die DE 10 2016 204593 A1 offenbart eine Fahrzeugfahrregelungsvorrichtung. Eine Fahrtenplan-Erzeugungseinheit erzeugt einen Kurs eines Fahrzeugs. Der Kurs ist eine Bewegungsbahn, entlang der das Fahrzeug auf einer Soll-Route fahren wird. Die Fahrtenplan-Erzeugungseinheit erzeugt einen Kurs des Fahrzeugs auf der Grundlage der durch ein Navigationssystem berechneten Soll-Route, der durch eine Fahrzeugposition-Erkennungseinheit erkannten Fahrzeugposition und der durch die Außensituation-Erkennungseinheit erkannten Außensituation des Fahrzeugs.

Der Erfindung liegt die Aufgabe zu Grunde, ein alternatives und/oder verbessertes Verfahren zur automatischen Querführung eines Folgefahrzeugs in einem Fahrzeug-Platoon zu schaffen, mit dem vorzugsweise Nachteile im Stand der Technik überwunden werden können. Vorzugsweise soll ein neuartiger Ansatz zur Bestimmung des Fahrbahnverlaufs als Referenz bzw. Solltrajektorie für die Querregelung geschaffen werden, mit der die automatische Querführung verbessert, insbesondere stabilisiert, werden kann.

Die Aufgabe wird gelöst durch die Merkmale der unabhängigen Ansprüche. Vorteilhafte Weiterbildungen sind in den abhängigen Ansprüchen und der Beschreibung angegeben.

Das Verfahren dient zur automatischen Querführung eines Folgefahrzeugs in einem Fahrzeug-Platoon (z. B. gebildet aus mehreren elektronisch gekoppelten Kraftfahrzeugen, die vorzugsweise in geringem Abstand zueinander auf einer Fahrspur folgen). Das Verfahren weist ein Bestimmen von ersten Spurdaten aus Karteninformationen (z. B. digitale Karte; online oder offline verfügbar) und (z. B. aktuellen) Positionsinformationen des Folgefahrzeugs auf. Das Verfahren weist ein Bestimmen von zweiten Spurdaten aus einer Erfassung von Spurmarkierungen (z. B. auf einer Fahrbahn) durch das Folgefahrzeug auf. Das Verfahren weist ein Bestimmen von dritten Spurdaten aus einer Objektverfolgungserfassung eines oder mehrerer dem Folgefahrzeug vorausfahrenden Fahrzeuge des Fahrzeug-Platoons auf. Das Verfahren weist ein Empfangen von vierten Spurdaten aus einer Erfassung von Spurmarkierungen durch ein Führungsfahrzeug des Fahrzeug-Platoons auf. Das Verfahren weist ein Bestimmen eines (Haupt- oder Referenz-) Spurverlaufs (z. B. äußere Spurgrenzen des Spurverlaufs) basierend auf den ersten Spurdaten, den zweiten Spurdaten, den dritten Spurdaten und den vierten
Spurdaten auf. Das Verfahren weist ein automatisches Querführen (z. B. Lenken und/oder Querregeln) des Folgefahrzeugs basierend auf dem bestimmten Spurverlauf auf.

Das Verfahren ermöglicht die Bestimmung eines fusionierter Fahrbahnverlaufs bzw. Spurverlaufs, welcher für das Folgefahrzeug als Referenz für die Querbewegung genutzt werden kann. Der fusionierte Spurverlauf kann von jedem Fahrzeug (bis auf das Führungsfahrzeug) des Fahrzeug-Platoons bestimmt und als Referenz genutzt werden. Dadurch kommt es zu keiner Verstärkung von Pendelbewegungen von vorn nach hinten im Fahrzeug-Platoon. Zudem können die Fahrzeuge des Fahrzeug-Platoons auch bei Spurwechseln des Führungsfahrzeugs in der Ausgangsspur verbleiben und werden ggf. automatisch bis zum Stillstand oder zur Fahrerübernahme eingebremst, wenn das Führungsfahrzeug sich aus dem Sichtfeld des unmittelbar folgenden Folgefahrzeugs bewegt. Schert ein Fahrzeug bspw. in der Platoonmitte aus, so können die nachfolgenden Fahrzeuge ohne Beeinträchtigung der Querführung bis zum nächsten Platoonfahrzeug aufschließen. Ebenfalls erlaubt das Verfahren bei beabsichtigten Spurwechseln eine ebenfalls nicht direkt oder nicht ausschließlich vom Heck eines Führungsfahrzeugs abhängige Vorgabe einer alternativen Fahrspur, wenn dies z.B. an einem Verflechtungsbereich etc. erforderlich sein sollte.

In einer besonders bevorzugten Ausführungsform sind die ersten Spurdaten als mathematisches Modell in Form einer ersten Spurverlaufshypothese, vorzugsweise in Form eines mathematischen Polynoms und/oder eines Klothoidenmodells, bestimmt, und/oder die zweiten Spurdaten als mathematisches Modell in Form einer zweiten Spurverlaufshypothese, vorzugsweise in Form eines mathematischen Polynoms und/oder eines Klothoidenmodells, bestimmt. Alternativ oder zusätzlich sind die dritten Spurdaten als mathematisches Modell in Form einer dritten Spurverlaufshypothese, vorzugsweise in Form eines mathematischen Polynoms und/oder eines Klothoidenmodells, bestimmt, und/oder die vierten Spurdaten als mathematisches Modell in Form einer vierten Spurverlaufshypothese, vorzugsweise in Form eines mathematischen Polynoms und/oder eines Klothoidenmodells, bestimmt. Es ist auch möglich, dass der (Haupt- oder Referenz-) Spurverlauf als mathematisches Modell in Form einer Spurverlaufshypothese, vorzugsweise in Form eines mathematischen Polynoms und/oder eines Klothoidenmodells, bestimmt ist.

In einer weiteren Ausführungsform werden zum Bestimmen des Spurverlaufs je nach Verfügbarkeit der Spurdaten eines, zwei, drei oder alle von den ersten Spurdaten, den zweiten Spurdaten, den dritten Spurdaten und den vierten Spurdaten berücksichtigt. Vorzugsweise wird der bestimmte Spurverlauf als Solltrajektorie für eine automatisierte Querführung des Folgefahrzeugs verwendet.

Zweckmäßig können die ersten, zweiten, dritten und/oder vierten Spurdaten Informationen zu einer Spurbreite, einer Spurlänge, einem Spurverlauf, einer Spurbegrenzung, einer Spurkrümmung, einer Fahrbahnbreite, einer Fahrbahnlänge, einem Fahrbahnverlauf, einer Fahrbahnbegrenzung und/oder einer Fahrbahnkrümmung aufweisen. Bei Angabe der Spurdaten, vorzugsweise der Spurhypothesen, in einem fahrzeugfesten Koordinatensystem sind zusätzlich Informationen zur relativen Lage sowie zum relativen Winkel zwischen Fahrzeuglängsachse zu Punkten entlang der Spurdaten, vorzugsweise Spurhypothesen, enthalten.

Beispielsweise können die Fahrzeuge des Fahrzeugplatoons während des Durchführens des Verfahrens in einem Platooning-Fahrmodus mit (z. B. bidirektionaler) elektronischer Kopplung (elektronischer Deichsel) zwischen den Fahrzeugen des Fahrzeug-Platoons sein.

In einem Ausführungsbeispiel kann das Bestimmen von den ersten Spurdaten ein Lokalisieren des Folgefahrzeugs auf einer (z. B. digitalen) Karte mittels eines satellitengestützen Positionsbestimmungssystems (GNSS) und/oder eines Navigationssystems des Folgefahrzeugs aufweisen. Die Genauigkeit der GNSS-Positionierung kann vorteilhafterweise, aber nicht zwangsweise mit Korrekturdaten (DGPS) erhöht werden. Die Verfügbarkeit der GNSS-Positionierung kann vorteilhafterweise, aber nicht zwangsweise durch Einbindung von Odometriedaten verbessert werden. Die Verortung innerhalb einer Fahrspur der digitalen Karte kann durch Anwendung von Map-Matching Verfahren, z. B. unter Nutzung sensorisch erfasster Fahrbahnmarkierungen unterstützt werden. Es ist auch möglich, dass eine Fahrspur des Folgefahrzeugs und/oder eine Position des Folgefahrzeugs in der Fahrspur aus den Karteninformationen und den Positionsinformationen des Folgefahrzeugs bestimmt wird (z. B. durch das Navigationssystems des Folgefahrzeugs). Bspw. können die ersten Spurdaten dann mittels der Karteninformationen von dem Navigationsgerät bereitgestellt werden. Beispielsweise kann eine Fahrspurhypothese des Folgefahrzeugs und/oder eine Fahrspurzuordnung des Folgefahrzeugs in der Fahrspur aus den Karteninformationen und den Positionsinformationen des Folgefahrzeugs mittels Koordinatentransformation in ein fahrzeugfestes Koordinatensystem bestimmt werden. Bspw. kann die erste Spurverlaufshypothese dann mittels der Karteninformationen bereitgestellt werden.

In einem weiteren Ausführungsbeispiel weist das Bestimmen von den zweiten Spurdaten ein Erfassen von Spurmarkierungen und/oder unmarkierten Fahrbahnbegrenzungen mittels eines, vorzugsweise kameragestützen, Spurmarkierungserfassungssystems des Folgefahrzeugs auf. Alternativ oder zusätzlich weist das Bestimmen von den zweiten Spurdaten ein Anwenden einer Bilderkennung zur Erkennung von Spurmarkierungen und/oder unmarkierten Fahrbahnbegrenzungen auf eine oder mehrere von einem Spurmarkierungserfassungssystem des Folgefahrzeugs erfassten Aufnahmen einer, vorzugsweise vorausliegenden, Umgebung des Folgefahrzeugs auf.

In einem weiteren Ausführungsbeispiel weist das Bestimmen von den dritten Spurdaten ein Durchführen der Objektverfolgungserfassung mittels Objekterkennung eines, vorzugsweise sensorfusionierten (z. B. mehrere Sensoren, von denen Daten fusioniert werden), kamera-, lidar-, radar- und/oder satellitenpositionsbestimmungsgestützten, Objektverfolgungserfassungssystems des Folgefahrzeugs auf. Es ist auch möglich, dass eine zurückliegende und/oder vorausliegende (prädizierte) geschätzte (z.B. extrapolierte) Trajektorie des einen oder der mehreren vorausfahrenden Fahrzeuge bestimmt wird, und/oder eine Querbewegung und/oder einer Fahrtrichtungsanzeige des einen oder der mehreren vorausfahrenden Fahrzeuge erfasst wird.

In einem weiteren Ausführungsbeispiel weist das Bestimmen von den vierten Spurdaten ein Erfassen von Spurmarkierungen mittels eines kameragestützen Spurmarkierungserfassungssystems des Führungsfahrzeugs und/oder ein Anwenden einer Bilderkennung zur Erkennung von Spurmarkierungen auf eine oder mehrere von einem Spurmarkierungserfassungssystem des Führungsfahrzeugs erfassten Aufnahmen einer, vorzugsweise vorausliegenden, Umgebung des Führungsfahrzeugs auf. Dabei ist es möglich, dass eine Koordinatentransformation zur Berechnung der Spurdaten, vorzugsweise der Spurverlaufshypothese, in fahrzeugfesten Koordinaten berechnet wird. Es ist möglich, dass die vierten Spurdaten via Car-to-Car-Kommunikation an eines oder mehrere Folgefahrzeuge übermittelt werden und dort per Koordinatentransformation in das jeweilige fahrzeugfeste Koordinatensystem umgerechnet werden. In einer weiteren Ausführungsform können die Ausgangsdaten der Spurerkennung im Führungsfahrzeug direkt an eines oder mehrere Folgefahrzeuge übermittelt werden, und dort zur Berechnung einer Spurverlaufshypothese genutzt werden.

In einer Ausführungsform ist der Spurverlauf als fusionierter Spurverlauf aus den ersten Spurdaten (z. B. die erste Spurverlaufshypothese), den zweiten Spurdaten (z. B. die zweite Spurverlaufshypothese), den dritten Spurdaten (z. B. die dritte Spurverlaufshypothese) und/oder den vierten Spurdaten (z. B. die vierte Spurverlaufshypothese) bestimmt.

In einer weiteren Ausführungsform sind die ersten Spurdaten (z. B. die erste Spurverlaufshypothese), die zweiten Spurdaten (z. B. die zweite Spurverlaufshypothese), die dritten Spurdaten (z. B. die dritte Spurverlaufshypothese) und/oder die vierten Spurdaten (z. B. die vierte Spurverlaufshypothese) jeweils mit einem Gewicht zum Bestimmten des Spurverlaufs gewichtet. Es ist möglich, dass zur Berechnung der dynamischen Gewichte die Kovarianzen der einzelnen Filter zur Hypothesenberechnung und/oder Wissen über die die aktuelle Verfügbarkeit / Qualität der jeweiligen Eingangsdaten in Form expliziten, z. B. aus Selbstdiagnose der beteiligten Systeme, oder impliziten Wissens, z. B. anhand der vorliegenden Fahrbahnsituation und heuristischer Zusammenhänge bzw. Erfahrungswerte über die Realibilität der jeweiligen Informationsquellen in der jeweiligen Situation, verwendet werden.

Es ist möglich, dass ein erstes Gewicht für die ersten Spurdaten (z. B. die erste Spurverlaufshypothese), ein zweites Gewichte für die zweiten Spurdaten (z. B. die zweite Spurverlaufshypothese), ein drittes Gewicht für die dritten Spurdaten (z. B. die dritte Spurverlaufshypothese) und/oder ein viertes Gewicht für die vierten Spurdaten (z. B. die vierte Spurverlaufshypothese) veränderlich (z. B. innerhalb jeweils oder allgemein vorgegebener Bereichsgrenzen) oder unveränderlich ist.

In einer Weiterbildung ist das erste Gewicht, das zweite Gewicht, das dritte Gewicht und/oder das vierte Gewicht durch Kovarianzmatrizen der jeweils verwendeten Filter (z. B. Einzelfilter) zum Bestimmen der jeweiligen Spurdaten (z. B. Spurhypothesen), wie z. B. Kalmanfilter, bestimmt bzw. vorgegeben.

Zusätzlich oder alternativ ist das erste Gewicht, das zweite Gewicht, das dritte Gewicht und/oder das vierte Gewicht basierend auf einer bestimmten Qualität der jeweiligen Bestimmung der ersten Spurdaten, der zweiten Spurdaten, der dritten Spurdaten und/oder der vierten Spurdaten (z. B. veränderlich) bestimmt bzw. vorgegeben.

In einer weiteren Ausführungsform ist das erste Gewicht basierend auf einer Anzahl verfügbarer Satelliten, einer rückgemeldeten Integrität der bestimmten Positionsdaten des Folgefahrzeugs, einer Verfügbarkeit eines Differentiellen Globalen Positionierungssystems und/oder einer Auflösung der Karteninformationen (z. B. veränderlich) bestimmt.

In einer weiteren Ausführungsform ist das zweite Gewicht basierend auf einem Abstand zwischen dem Folgefahrzeug und einem dem Folgefahrzeug bspw. direkt vorausfahrenden Fahrzeug des Fahrzeug-Platoons, einer Größe eines durch das direkt vorausfahrenden Fahrzeug unverdeckten Sichtbereichs eines Spurmarkierungserfassungssystems des Folgefahrzeugs, einer erfassten Länge der Spurmarkierungen und/oder einem erfassten Vorhandensein der Spurmarkierungen bestimmt.

In einer weiteren Ausführungsform ist das dritte Gewicht basierend auf einer Anzahl von ausgewerteten Systemen (z. B. Kamerasystem, Lidarsystem und/oder Radarsystem des Folgefahrzeugs und/oder Positionsbestimmungssystem des vorausfahrenden Fahrzeugs) sowie bspw. der jeweiligen Konfidenzen bzw. der Trackingdauer, einer Länge einer bestimmten zurückliegenden und/oder vorausliegenden geschätzten (z. B. extrapolierten) Trajektorie des einen oder der mehreren vorausfahrenden Fahrzeuge, einer Anzahl von Messpunkten und/oder einer Erfassung eines Fahrtrichtungswechselsignals des einen oder der mehreren vorausfahrenden Fahrzeuge bestimmt.

In einer weiteren Ausführungsform ist das vierte Gewicht basierend auf einem Abstand zwischen dem Führungsfahrzeug und einem dem Führungsfahrzeug direkt vorausfahrenden Fahrzeug, einer Größe eines durch das direkt vorausfahrenden Fahrzeug unverdeckten Sichtbereichs eines Spurmarkierungserfassungssystems des Führungsfahrzeugs, einer erfassten Länge der Spurmarkierungen und/oder einem erfassten Vorhandensein der Spurmarkierungen bestimmt.

Beispielsweise können in einer Ausführungsform alle Spurverlaufsdaten (z. B. Spurverlaufshypothesen) mit Zeitstempeln eines synchronisierten und/oder fahrzeugübergreifend identischen Zeitgebers (z.B. GNSS-Zeit) versehen sein. Dabei kann z. B. der Zeitpunkt der sensorischen Erfassung eines Umfeldobjekts bzw. einer GNSS-Position maßgeblich sein. Es ist möglich, durch Prädiktion bzw. Retrodiktion der Daten in einem Filterschritt die einzelnen Spurdaten (Spurhypothesen) auf einen gemeinsamen Zeitpunkt umzurechnen und so die Güte des fusionierten Fahrspurmodells zu erhöhen.

In einem Ausführungsbeispiel weist das Verfahren ein Anwenden einer Koordinatentransformation auf die vierten Spurdaten (z. B. die vierte Spurhypothese), die sich auf das Führungsfahrzeug beziehen, zum Abgleich mit den ersten, zweiten und/oder dritten Spurdaten (z. B. Spurhypothesen), die sich auf das Folgefahrzeug beziehen, auf.

In einem weiteren Ausführungsbeispiel sind der Spurverlauf, die ersten Spurdaten (z. B. die erste Spurhypothese), die zweiten Spurdaten (z. B. die zweite Spurhypothese) und/oder die dritten Spurdaten (z. B. die dritte Spurhypothese) von dem Folgefahrzeug bestimmt und/oder die vierten Spurdaten (z. B. die vierte Spurhypothese) von dem Führungsfahrzeug oder von dem Folgefahrzeug bestimmt.

In einer Ausführungsvariante werden die vierten Spurdaten (z. B. die vierte Spurhypothese) mittels einer Fahrzeug-zu-Fahrzeug-Kommunikation von dem Führungsfahrzeug zu dem Folgefahrzeug übertragen (z. B. mittels einer Kommunikationsschnittstelle des Führungsfahrzeugs und einer Kommunikationsschnittstelle des Folgefahrzeugs).

In einer weiteren Ausführungsvariante sind die erste Spurhypothese, die zweite Spurhypothese, die dritte Spurhypothese und/oder die vierte Spurhypothese als Spurpolynome oder Klothoidenmodelle gebildet und/oder der (Haupt-) Spurverlauf als fusionierte und/oder zusammengefasste Spurhypothese der ersten, zweiten dritten und vierten Spurdaten gebildet.

Zweckmäßig kann ein Spurpolynom einen Spurverlauf in Form eines mathematischen Polynoms approximieren. Alternativ können bspw. Klothoidenmodelle verwendet werden.

Die Erfindung bezieht sich auch auf ein Kraftfahrzeug, vorzugsweise ein Nutzfahrzeug (z. B. Lastkraftwagen oder Omnibus), mit einer Steuereinheit, die zum Ausführen eines Verfahrens wie hierin offenbart ausgebildet ist.

Zweckmäßig kann das Kraftfahrzeug das Folgefahrzeug gemäß dem Verfahren sein.

Insbesondere kann sich der Begriff "Steuereinheit" auf eine Elektronik und/oder mechanische Steuerung beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

In einer Weiterbildung weist das Kraftfahrzeug ein Navigationssystem mit den Karteninformationen, ein satellitengestütztes (z. B. nicht notwendigerweise differentielles) Positionsbestimmungssystem zur Bestimmung einer Position des Kraftfahrzeugs, ein, vorzugsweise kameragestütztes, Spurmarkierungserfassungssystem zur Erfassung von Spurmarkierungen und/oder unmarkierter Fahrbahnbegrenzungen auf einer Fahrbahn, ein, vorzugsweise kamera-, radar-, lidar- und/oder satellitenpositionsbestimmungsgestütztes, Objektverfolgungserfassungssystem zur Verfolgungserfassung eines oder mehrerer vorausfahrender Fahrzeuge und/oder eine Kommunikationsschnittstelle zur Fahrzeug-zu-Fahrzeug-Kommunikation mit dem Führungsfahrzeug auf.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Draufsicht auf ein Kraftfahrzeug gemäß der vorliegenden Offenbarung;
- Figur 2: eine schematische Draufsicht auf ein Fahrzeug-Platoon gemäß der vorliegenden Offenbarung; und
- Figur 3: ein Ablaufdiagramm eines Verfahrens zur automatischen Querführung eines Folgefahrzeugs in einem Fahrzeug-Platoon gemäß der vorliegenden Offenbarung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

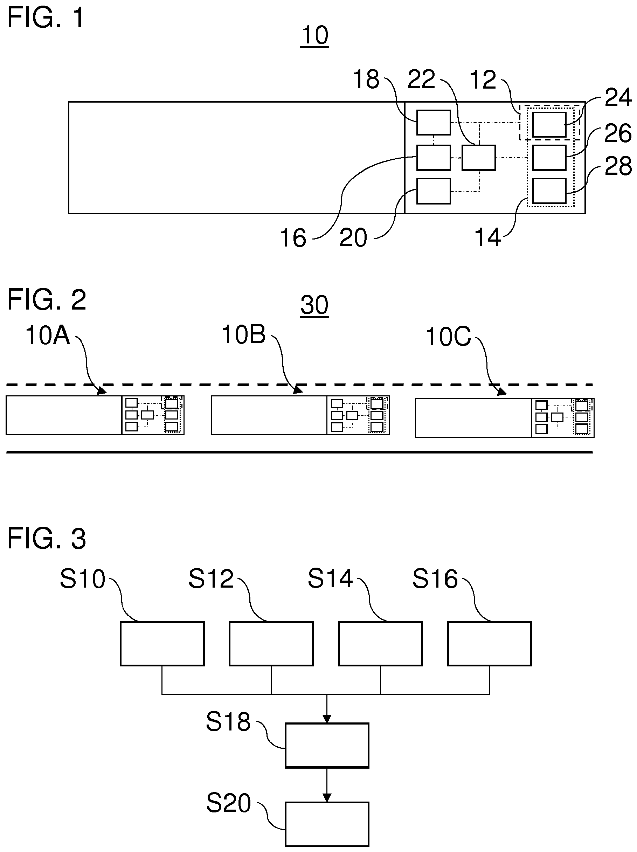

Die Figur 1 zeigt ein Kraftfahrzeug 10. Insbesondere kann das Kraftfahrzeug 10 ein Nutzfahrzeug, vorzugsweise ein Lastkraftwagen oder ein Omnibus, sein.

Das Kraftfahrzeug 10 weist mehrere Komponenten auf, die zur automatischen Querführung des Kraftfahrzeugs 10 in einem Fahrzeug-Platoon verwendbar sind. Insbesondere kann das Kraftfahrzeug 10 ein Spurmarkierungserfassungssystem 12, ein Objektverfolgungserfassungssystem 14, ein Positionsbestimmungssystem 16, ein Navigationssystem (bzw. ein Modul zur Selbstlokalisierung innerhalb einer digitalen Karte) 18 und/oder eine Kommunikationsschnittstelle 20 aufweisen. Das Kraftfahrzeug 10 weist zudem eine Steuereinheit 22 auf. Das Spurmarkierungserfassungssystem 12, das Objektverfolgungserfassungssystem 14, das Positionsbestimmungssystem 16, das Navigationssystem 18 und/oder die Kommunikationsschnittstelle 20 können kabelgebunden oder kabellos miteinander und/oder der Steuereinheit 22 kommunizieren.

Das Spurmarkierungserfassungssystem 12 weist ein Kamerasystem 24 auf. Das Kamerasystem 24 kann ein bewegtes Bild (das heißt mehrere zeitlich aufeinanderfolgende Aufnahmen) einer Umgebung des Kraftfahrzeugs 10 aufnehmen. Das Kamerasystem 24 kann eine oder mehrere Videokameras aufweisen. Das Kamerasystem 24 kann insbesondere auf eine Umgebung seitlich des Kraftfahrzeugs 10 und bezüglich einer Vorwärtsfahrtrichtung des Kraftfahrzeugs vor dem Kraftfahrzeug 10 gerichtet sein. Durch eine Anwendung eines Bilderkennungsverfahrens können in dem bewegten Bild des Kamerasystems 24 Spurmarkierungen auf einer Fahrbahn erkannt werden, sofern vorhanden.

Das Objektverfolgungserfassungssystem 14 weist beispielsweise das Kamerasystem 24, ein Radarsystem 26 und ein Lidarsystem 28 auf. Das Objektverfolgungserfassungssystem 14 fusioniert Sensordaten von dem Kamerasystem 24, dem Radarsystem 26 und dem Lidarsystem 28. Das Objektverfolgungserfassungssystem 14 ist dazu eingerichtet, einen relativen Abstand zwischen dem Kraftfahrzeug 10 und einem vorausfahrenden Kraftfahrzeug in x-Richtung (Längsrichtung) und y-Richtung (Querrichtung) des Kraftfahrzeugs 10 zu ermitteln. Das Objektverfolgungserfassungssystem 14 kann beispielsweise ein Objekttracking bezüglich des vorausfahrenden Kraftfahrzeugs, zum Beispiel unter Anwendung von Bilderkennungsverfahren, durchführen. Es ist auch möglich, dass das Objektverfolgungserfassungssystem 14 den relativen Abstand zu mehreren vorausfahrenden Kraftfahrzeugen ermitteln kann. Das Objektverfolgungserfassungssystem 14 kann alternative und/oder zusätzliche Systeme zur Objektverfolgungserfassung aufweisen. Z. B. kann eine Position oder ein Positionsverlauf des vorausfahrenden Kraftfahrzeugs durch Empfang von entsprechenden Positionsdaten des vorausfahrenden Kraftfahrzeugs mittels der Kommunikationsschnittstelle 20 von dem vorausfahrenden Fahrzeug durch das Kraftfahrzeug 10 bestimmt werden.

Das Positionsbestimmungssystem 16 ist ein satellitengestütztes Positionsbestimmungssystem. Das Positionsbestimmungssystem 16 kann beispielsweise ein GPS-System sein. Das Positionsbestimmungssystem 16 empfängt Daten von mehreren Satelliten, aus denen eine globale Position des Kraftfahrzeugs 10 bestimmbar ist.

Das Navigationssystem 18 weist einen Speicher mit Karteninformationen zu einer Umgebung des Kraftfahrzeugs 10 auf. Die Karteninformationen weisen eine digitale Karte der Umgebung sowie Spurinformationen bezüglich einer Anzahl, einem Verlauf, einer Richtung und einer Breite von Fahrspuren der Straßen der digitalen Karte auf. Unter Einbeziehung der mithilfe des Positionsbestimmungssystems 16 bestimmten Positionen des Kraftfahrzeugs 10 kann eine Position des Kraftfahrzeugs 10 auf der digitalen Karte bestimmt werden. Insbesondere kann eine Spurposition des Kraftfahrzeugs 10 auf einer Straße der digitalen Karte bestimmt werden.

Die Kommunikationsschnittstelle 20 ist zur bidirektionalen Kommunikation mit Kommunikationsschnittstellen anderer Kraftfahrzeuge, insbesondere im Fahrzeug-Platoon, eingerichtet. Mit anderen Worten gesagt, die Kommunikationsschnittstelle 20 ist eine Fahrzeug-zu-Fahrzeug-Kommunikationsschnittstelle.

Die Steuereinheit 22 ist dazu eingerichtet einen Platooning-Fahrmodus für das Kraftfahrzeug 10 bereitzustellen. Der Platoon-Fahrmodus kann beispielsweise basierend auf Daten von den Systemen 12-28 durchgeführt werden. Im Platoon-Fahrmodus ist das Kraftfahrzeug 10 Teil eines Fahrzeug-Platoons. Das Fahrzeug-Platoon wird durch bidirektionale Kommunikation zwischen den einzelnen Kraftfahrzeugen des Fahrzeug-Platoons gebildet und von einem Führungsfahrzeug angeführt. Die Kraftfahrzeuge im Fahrzeug-Platoon sind elektronisch miteinander gekoppelt. Im Fahrzeug-Platoon können sehr geringe Abstände (zum Beispiel kleiner als 10 Meter) zwischen Folgefahrzeug und vorausfahrendem Fahrzeug eingestellt werden.

Die Figur 2 zeigt ein Fahrzeug-Platoon 30. Beispielhaft ist das Fahrzeug-Platoon 30 aus drei Kraftfahrzeugen 10A, 10B und 10C gebildet. Die Kraftfahrzeuge 10A - 10C können entsprechend dem Kraftfahrzeug 10 von Figur 1 ausgebildet sein. Aus Gründen der Übersichtlichkeit sind in Figur 2 keine Bezugszeichen für die Systeme 12-28 der Kraftfahrzeuge 10A - 10C angegeben.

Nachfolgend ist eine rein beispielhaft Anwendung des Verfahrens zur Sollwertbestimmung für die automatische Querführung des Folgefahrzeugs 10A in dem Fahrzeug-Platoon 30 unter Bezug auf die Figuren 1 bis 3 beschrieben. Das Verfahren kann zumindest teilweise von der Steuereinheit 22 des Folgefahrzeugs 10A und/oder des Führungsfahrzeugs 10C durchgeführt werden.

Prinzipiell werden im Verfahren zunächst aus mehreren unterschiedlichen Datenquellen Spurdaten bestimmt. Die unterschiedlichen Spurdaten werden dann miteinander zu einem Spurverlauf fusioniert. Insbesondere können die Spurdaten jeweils als mathematisch modellierte Spurverlaufshypothesen, z. B. in Form von Polynomen oder Klothoidenmodellen, bestimmt werden. Der fusionierte Spurverlauf kann dann als mathematisch modellierte (Haupt- bzw. Referenz-) Spurverlaufshypothese z. B. aus den ersten bis vierten Spurverlaufshypothesen bestimmt werden, je nach Verfügbarkeit, z. B. in Form eines Polynoms oder Klothoidenmodels Die Querführung des Folgefahrzeugs 10A erfolgt basierend auf dem fusionierten Spurverlauf. Entfällt eine oder mehrere der genutzten Datenquellen, so kann dies bspw. durch Nutzung der verbliebenen Datenquellen ausgeglichen werden.

In einem Verfahrensschritt S10 werden erste Spurdaten z. B. als erste Spurverlaufshypothese aus Karteninformationen und Positionsinformationen des Folgefahrzeugs 10A bestimmt. Das Folgefahrzeug 10A kann auf der digitalen Karte des Navigationssystems 18 mittels der Position, die durch das satellitengestützte Positionsbestimmungssystem 16 bestimmt wurde, lokalisiert werden. Die ersten Spurdaten können bspw. eine Soll-Fahrspur des Folgefahrzeugs 10 und eine Relativposition und einen Relativwinkel zur Solltrajektorie in der Fahrspur, insbesondere auch bezüglich der beidseitigen Spurbegrenzung, aufweisen.

In einem Verfahrensschritt S12 werden zweite Spurdaten z. B. als zweite Spurverlaufshypothese aus einer Erfassung von Spurmarkierungen durch das Spurmarkierungserfassungssystem 12 des Folgefahrzeugs 10A bestimmt. Die Spurmarkierungen auf der Fahrbahn können mittels des Kamerasystems 24 des Folgefahrzeugs 10A erfasst und unter Anwendung des Bilderkennungsverfahrens erkannt werden. Je nach Abstand zum vorausfahrenden Fahrzeug 10B kann eine Länge der erkannten Spurmarkierungen variieren, im Extremfall bis auf null.

In einem Verfahrensschritt S14 werden dritte Spurdaten z. B. als dritte Spurverlaufshypothese aus einer Objektverfolgungserfassung des vorausfahrenden Fahrzeugs 10B des Fahrzeug-Platoons 30 bestimmt. Zur Objektverfolgungserfassung (Objekttracking) wird das Objektverfolgungserfassungssystem 14 verwendet. Dieses kann durch Sensorfusion des Kamerasystems 24, des Radarsystems 26 und/oder des Lidarsystems 28 einen sich verändernden Relativabstand zum vorausfahrenden Fahrzeug 10B verfolgen. Basierend auf mehreren bestimmten, zeitlich aufeinanderfolgenden Relativabständen kann eine bisherige Trajektorie des vorausfahrenden Fahrzeugs 10B ermittelt und eine zukünftige Trajektorie des vorausfahrenden Fahrzeugs 10B geschätzt (z. B. extrapoliert) werden, deren Daten als die dritten Spurdaten verwendet werden können. Je nach Konfiguration des Objektverfolgungserfassungssystems 14 kann es auch möglich sein, zurückliegende und/oder vorausliegende geschätzte Trajektorien für mehrere vorausfahrende Fahrzeuge zu ermitteln. Auf das Ausführungsbeispiel bezogen heißt das, dass das Objektverfolgungserfassungssystem 14 des Folgefahrzeugs 10A sowohl für das vorausfahrende Fahrzeug 10B als auch für das Führungsfahrzeug 10C eine zurückliegende und/oder vorausliegende geschätzte Trajektorie bestimmen kann.

In einem Verfahrensschritt S16 werden vierte Spurdaten z. B. als vierte Spurverlaufshypothese aus einer Erfassung von Spurmarkierungen durch das Spurmarkierungserfassungssystem 12 des Führungsfahrzeugs 10C bestimmt. Die Spurmarkierungen auf der Fahrbahn können mittels des Kamerasystems 24 des Führungsfahrzeugs 10C erfasst und unter Anwendung des Bilderkennungsverfahrens erkannt werden. Typischerweise wird eine Länge der erkannten Spurmarkierungen bei den vierten Spurdaten länger als bei den zweiten Spurdaten sein, da das Führungsfahrzeug 10C das vorderste Fahrzeug des Fahrzeug-Platoons 30 ist.

Im Verfahrensschritt S16 können die vierten Spurdaten von der Kommunikationsschnittstelle 20 des Führungsfahrzeugs 10C zu der Kommunikationsschnittstelle 20 des Folgefahrzeugs 10A übertragen werden.

Zusätzlich kann im vierten Verfahrensschritt S16 eine Koordinatentransformation durchgeführt werden, um die vierten Spurdaten (z. B. in Form der vierten Spurhypothese), die sich ursprünglich auf das Führungsfahrzeug 10C beziehen, auf das Folgefahrzeug 10A zu beziehen. Die Koordinatentransformation kann beispielsweise von der Steuereinheit 22 des Führungsfahrzeugs 10C oder des Folgefahrzeugs 10A durchgeführt werden, basierend auf Positionsinformationen bezüglich des Führungsfahrzeugs 10C und des Folgefahrzeugs 10A.

Die Verfahrensschritte S10 bis S16 können beispielsweise gleichzeitig oder zumindest teilweise zeitlich versetzt durchgeführt werden.

In einem Verfahrensschritt S18 werden die in den Verfahrensschritten S10 bis S16 bestimmten ersten bis vierten Spurdaten miteinander fusioniert. Insbesondere können die als Spurpolynome vorliegenden ersten bis vierten Spurdaten miteinander fusioniert bzw. verrechnet werden, um einen fusionierten Spurverlauf zu bestimmen.

Zum Fusionieren können die ersten bis vierten Spurdaten (z. B. Spurhypothesen) gewichtet werden. So kann besonders zuverlässigen und/oder genauen Spurdaten ein höheres Gewicht als anderen Spurdaten zugewiesen werden. Spurdaten mit einem höheren Gewicht als andere Spurdaten haben einen größeren Anteil bzw. Einfluss auf die Bestimmung des fusionierten Spurverlaufs. Es ist auch möglich, dass die Gewichte veränderlich sind, z. B. abhängig von einer bestimmten Qualität für die jeweiligen Spurdaten. Die Gewichte können bspw. innerhalb eines vorbestimmten Bereichs veränderlich sein.

Beispielsweise kann ein erstes Gewicht für die ersten Spurdaten u.a. auf einer Anzahl verfügbarer Satelliten zur Positionsbestimmung mittels des Positionsbestimmungssystems 16 basieren. Das Positionsbestimmungssystem 16 kann zudem eine Rückmeldung über die Integrität der bestimmten Position, insbesondere bezüglich der von den Satelliten empfangenen Daten, geben. Die Rückmeldung kann in das erste Gewicht eingehen. Es ist auch möglich, dass beispielsweise abschnittsweise die Verwendung eines besonders genauen Differentiellen Globalen Positionierungssystems (z. B. DGPS) durch das Positionsbestimmungssystem 16 möglich ist. Für die Dauer der Verwendung des Differentiellen Globalen Positionierungssystems kann das erste Gewicht erhöht sein, zum Beispiel um einen vorbestimmten Wert. Es ist auch möglich, dass das erste Gewicht zusätzlich oder alternativ in Abhängigkeit von einer Auflösung der durch das Navigationssystem 18 zur Verfügung stehenden Karteninformationen gebildet ist. Je größer eine Anzahl verfügbarer Satelliten ist, je größer eine rückgemeldete Integrität ist, je länger die Verwendung eines Differentiellen Globalen Positionierungssystems ist und/oder je höher die Auflösung der Karteninformationen ist, desto größer kann das erste Gewicht sein.

Zweckmäßig kann ein zweites Gewicht für die zweiten Spurdaten basierend auf einem Abstand zwischen dem Folgefahrzeug 10A und dem direkt vorausfahrenden Fahrzeug 10B des Fahrzeug-Platoons 30 bestimmt werden. Der Abstand kann einen direkten Einfluss auf den Sichtbereich des Kamerasystems 24 des Folgefahrzeug 10A haben. Bei einem großen Abstand zwischen dem Folgefahrzeug 10A und dem vorausfahrenden Fahrzeug 10B kann der Sichtbereich des Kamerasystems 24 durch das vorausfahrende Fahrzeug 10B kaum verdeckt sein. Bei dem großen Abstand kann eine erfassbare Länge der Spurmarkierungen daher vergleichsweise lang sein. Bei einem geringen Abstand zwischen dem Folgefahrzeug 10A und dem vorausfahrenden Fahrzeug 10B kann der Sichtbereich des Kamerasystems 24 durch das vorausfahrende Fahrzeug 10B verdeckt sein. Somit kann eine erfassbare Länge der Spurmarkierungen vergleichsweise kurz sein. Es ist auch möglich, dass die Spurmarkierungen aufgrund der Verdeckung gar nicht erfassbar sind. Beispielsweise kann die erfassbare oder erfasste Länge der Spurmarkierungen zum Bilden des zweiten Gewichts verwendet werden. Je länger die Länge der Spurmarkierungen ist, je größer der Abstand zwischen dem Folgefahrzeugs 10A und dem vorausfahrenden Fahrzeug 10B ist und/oder je größer der Sichtbereich des Kamerasystems 24 des Folgefahrzeugs 10A ist, desto größer kann das zweite Gewicht sein.

Beispielsweise kann ein drittes Gewicht für die dritten Spurdaten auf einer Anzahl von ausgewerteten Systemen des Objektverfolgungserfassungssystems 14 basieren. Das dritte Gewicht kann ferner beispielsweise in Abhängigkeit von einer Länge der bestimmten zurückliegenden und/oder vorausliegenden geschätzten Trajektorie des vorausfahrenden Fahrzeugs 10B, einer Anzahl von Messpunkten zur Bestimmung der Trajektorie(n) und/oder einer Erfassung eines Fahrtrichtungswechselsignals des einen oder der mehreren vorausfahrenden Fahrzeuge gebildet sein. Je mehr Sensoren bzw. Systeme von dem Objektverfolgungserfassungssystem 14 verwendet werden oder verwendbar sind, je länger die bestimmte(n) Trajektorie(n) ist bzw. sind und/oder je größer die Anzahl der Messpunkte ist, desto höher kann das dritte Gewicht sein.

Hingegen kann die Erfassung eines Fahrtrichtungswechselsignals, z. B. einer äußeren Fahrtrichtungswechselanzeige (z. B. Blinker) des vorausfahrenden Fahrzeugs 10B, das dritte Gewicht verringern, zum Beispiel bis auf 0. Damit kann sichergestellt werden, dass bei einem Spurwechsel des vorausfahrenden Fahrzeugs 10B, das heißt bei einem Ausscheren aus dem Fahrzeug-Platoon 30, das Folgefahrzeug 10A nicht ungewollt zumindest teilweise folgt. Stattdessen kann bestimmt werden, dass das Folgefahrzeugs 10A zum nächsten vorausfahrenden Fahrzeug, hier dem Führungsfahrzeug 10C, aufschließt und einen Abstand auf einen vorbestimmten Abstand zum Halten des Fahrzeug-Platoons 30 verringert.

Beispielsweise kann ein viertes Gewicht für die vierten Spurdaten basierend auf einem Abstand zwischen dem Führungsfahrzeug 10C und einem diesem vorausfahrenden Fahrzeug (nicht dargestellt) außerhalb des Fahrzeug-Platoons 30 bestimmt werden. Der Abstand kann wiederum einen direkten Einfluss auf den Sichtbereich des Kamerasystems 24 des Führungsfahrzeugs 10C haben, ähnlich zu der beispielhaften Bestimmung des zweiten Gewichts. Je länger die Länge der erfassbaren oder erfassten Spurmarkierungen ist, je größer der Abstand zwischen dem Führungsfahrzeug 10C und dem vorausfahrenden Fahrzeug (nicht dargestellt) ist und/oder je größer der Sichtbereich des Kamerasystems 24 des Führungsfahrzeugs 10C ist, desto größer kann das vierte Gewicht sein. Auch die Verfügbarkeit bzw. Qualität der zur Übertragung verwendeten Car-to-Car-Kommunikation kann mit in die Berechnung der Gewichte eingehen.

Basierend auf dem im Verfahrensschritt S18 bestimmten fusionierten Spurverlauf erfolgt im Verfahrensschritt S20 eine automatisierte Querführung des Folgefahrzeugs 10A. Die automatisierte Querführung kann bspw. das Halten eines vorbestimmten Relativabstands zu einer Spurbegrenzung des fusionierten Spurverlaufs aufweisen. Die automatisierte Querführung kann beispielsweise auch das Halten einer Mittenposition im fusionierten Spurverlauf aufweisen. Die Querführung kann die Vorgabe eines Lenkwinkels für das Folgefahrzeug 10A aufweisen. Der Lenkwinkel kann mittels eines Lenkaktuators (nicht dargestellt) des Folgefahrzeugs 10A eingeregelt werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Durchführung des Bestimmens von ersten Spurdaten, des Bestimmens von zweiten Spurdaten, des Bestimmens von dritten Spurdaten, des Bestimmens von vierten Spurdaten, des Bestimmens eines Spurverlaufs und des Querführens des Folgefahrzeugs des unabhängigen Anspruchs 1 offenbart.

### Bezugszeichenliste

- 10: Kraftfahrzeug
- 10A: Folgefahrzeug
- 10B: Vorausfahrendes Fahrzeug
- 10C: Führungsfahrzeug
- 12: Spurmarkierungserfassungssystem
- 14: Objektverfolgungserfassungssystem
- 16: Positionsbestimmungssystem
- 18: Navigationssystem
- 20: Kommunikationsschnittstelle
- 22: Steuereinheit
- 24: Kamerasystem
- 26: Radarsystem
- 28: Lidarsystem
- 30: Fahrzeug-Platoon

- S10-S20: Verfahrensschritte

## Patentansprüche

1. Verfahren zur automatischen Querführung eines Folgefahrzeugs (10A) in einem Fahrzeug-Platoon (30), aufweisend;
Bestimmen von ersten Spurdaten aus Karteninformationen und Positionsinformationen des Folgefahrzeugs (10A);
Bestimmen von zweiten Spurdaten aus einer Erfassung von Spurmarkierungen durch das Folgefahrzeug (10A);
Bestimmen von dritten Spurdaten aus einer Objektverfolgungserfassung eines oder mehrerer dem Folgefahrzeug (10A) vorausfahrenden Fahrzeuge (10B, 10C) des Fahrzeug-Platoons (30);
Empfangen von vierten Spurdaten aus einer Erfassung von Spurmarkierungen durch ein Führungsfahrzeug (10C) des Fahrzeug-Platoons (30);
Bestimmen eines Spurverlaufs basierend auf den ersten Spurdaten, den zweiten Spurdaten, den dritten Spurdaten und den vierten Spurdaten; und
Querführen des Folgefahrzeugs (10A) basierend auf dem bestimmten Spurverlauf.

2. Verfahren nach Anspruch 1, wobei:
die ersten Spurdaten als mathematisches Modell in Form einer ersten Spurverlaufshypothese, vorzugsweise in Form eines mathematischen Polynoms und/oder eines Klothoidenmodells, bestimmt sind; und/oder
die zweiten Spurdaten als mathematisches Modell in Form einer zweiten Spurverlaufshypothese, vorzugsweise in Form eines mathematischen Polynoms und/oder eines Klothoidenmodells, bestimmt sind; und/oder
die dritten Spurdaten als mathematisches Modell in Form einer dritten Spurverlaufshypothese, vorzugsweise in Form eines mathematischen Polynoms und/oder eines Klothoidenmodells, bestimmt sind; und/oder
die vierten Spurdaten als mathematisches Modell in Form einer vierten Spurverlaufshypothese, vorzugsweise in Form eines mathematischen Polynoms und/oder eines Klothoidenmodells, bestimmt sind; und/oder
der Spurverlauf als mathematisches Modell in Form einer Spurverlaufshypothese, vorzugsweise in Form eines mathematischen Polynoms und/oder eines Klothoidenmodells, bestimmt ist.

3. Verfahren nach Anspruch 1 oder Anspruch 2, wobei:
zum Bestimmen des Spurverlaufs je nach Verfügbarkeit der Spurdaten eines, zwei, drei oder alle von den ersten Spurdaten, den zweiten Spurdaten, den dritten Spurdaten und den vierten Spurdaten berücksichtigt werden; und/oder
der bestimmte Spurverlauf als Solltrajektorie für eine automatisierte Querführung des Folgefahrzeugs (10A) verwendet wird.

4. Verfahren nach einem der vorherigen Ansprüche, wobei das Bestimmen von den ersten Spurdaten aufweist:
Lokalisieren des Folgefahrzeugs (10A) auf einer Karte mittels eines satellitengestützen Positionsbestimmungssystems (16) und/oder eines Navigationssystems (18) des Folgefahrzeugs (10A); und/oder
Bestimmen einer Fahrspur des Folgefahrzeugs (10A) und/oder einer Position des Folgefahrzeugs (10A) in der Fahrspur aus den Karteninformationen und den Positionsinformationen des Folgefahrzeugs (10A).

5. Verfahren nach einem der vorherigen Ansprüche, wobei das Bestimmen von den zweiten Spurdaten aufweist:
Erfassen von Spurmarkierungen und/oder unmarkierten Fahrbahnbegrenzungen mittels eines kameragestützen Spurmarkierungserfassungssystems (12) des Folgefahrzeugs (10A); und/oder
Anwenden einer Bilderkennung zur Erkennung von Spurmarkierungen und/oder unmarkierten Fahrbahnbegrenzungen auf eine oder mehrere von einem Spurmarkierungserfassungssystem (12) des Folgefahrzeugs (10A) erfassten Aufnahmen einer, vorzugsweise vorausliegenden, Umgebung des Folgefahrzeugs (10A).

6. Verfahren nach einem der vorherigen Ansprüche, wobei das Bestimmen von den dritten Spurdaten aufweist:
Durchführen der Objektverfolgungserfassung mittels Objekterkennung eines, vorzugsweise sensorfusionierten, kameragestützten, lidargestützten, radargestützten und/oder satellitenpositionsbestimmungsgestützten, Objektverfolgungserfassungssystems (14) des Folgefahrzeugs (10A); und/oder
Bestimmen einer zurückliegenden und/oder vorausliegenden geschätzten Trajektorie des einen oder der mehreren vorausfahrenden Fahrzeuge (10B, 10C); und/oder
Erfassen einer Querbewegung und/oder einer Fahrtrichtungsanzeige des einen oder der mehreren vorausfahrenden Fahrzeuge (10B, 10C).

7. Verfahren nach einem der vorherigen Ansprüche, wobei das Bestimmen von den vierten Spurdaten aufweist:
Erfassen von Spurmarkierungen und/oder unmarkierten Fahrbahnbegrenzungen mittels eines kameragestützen Spurmarkierungserfassungssystems (12) des Führungsfahrzeugs (10C); und/oder
Anwenden einer Bilderkennung zur Erkennung von Spurmarkierungen und/oder unmarkierten Fahrbahnbegrenzungen auf eine oder mehrere von einem Spurmarkierungserfassungssystem (12) des Führungsfahrzeugs (10C) erfassten Aufnahmen einer, vorzugsweise vorausliegenden, Umgebung des Führungsfahrzeugs (10C).

8. Verfahren nach einem der vorherigen Ansprüche, wobei:
der Spurverlauf als fusionierter Spurverlauf aus den ersten Spurdaten, den zweiten Spurdaten, den dritten Spurdaten und/oder den vierten Spurdaten bestimmt ist.

9. Verfahren nach einem der vorherigen Ansprüche, wobei:
die ersten Spurdaten, die zweiten Spurdaten, die dritten Spurdaten und/oder die vierten Spurdaten jeweils mit einem Gewicht zum Bestimmten des Spurverlaufs gewichtet sind, und/oder
ein erstes Gewicht für die ersten Spurdaten, ein zweites Gewichte für die zweiten Spurdaten, ein drittes Gewicht für die dritten Spurdaten und/oder ein viertes Gewicht für die vierten Spurdaten veränderlich oder unveränderlich ist.

10. Verfahren nach Anspruch 9, wobei:
das erste Gewicht, das zweite Gewicht, das dritte Gewicht und/oder das vierte Gewicht durch Kovarianzmatrizen der jeweils verwendeten Filter zum Bestimmen der jeweiligen Spurdaten, wie z. B. Kalmanfilter, bestimmt ist; und/oder
das erste Gewicht, das zweite Gewicht, das dritte Gewicht und/oder das vierte Gewicht basierend auf einer bestimmten Qualität der jeweiligen Bestimmung der ersten Spurdaten, der zweiten Spurdaten, der dritten Spurdaten und/oder der vierten Spurdaten bestimmt ist.

11. Verfahren nach Anspruch 9 oder Anspruch 10, wobei:
das erste Gewicht basierend auf einer Anzahl verfügbarer Satelliten, einer rückgemeldeten Integrität der bestimmten Positionsdaten des Folgefahrzeugs (10A), einer Verfügbarkeit eines Differentiellen Globalen Positionierungssystems und/oder einer Auflösung der Karteninformationen bestimmt ist; und/oder
das zweite Gewicht basierend auf einem Abstand zwischen dem Folgefahrzeug (10A) und einem dem Folgefahrzeug (10A) direkt vorausfahrenden Fahrzeug (10B) des Fahrzeug-Platoons (30), einer Größe eines durch das direkt vorausfahrenden Fahrzeug (10B) unverdeckten Sichtbereichs eines Spurmarkierungserfassungssystems (12) des Folgefahrzeugs (10A), einer erfassten Länge der Spurmarkierungen und/oder einem erfassten Vorhandensein der Spurmarkierungen bestimmt ist.

12. Verfahren nach einem der Ansprüche 9 bis 11, wobei:
das dritte Gewicht basierend auf einer Anzahl von ausgewerteten Systemen, einer Länge einer bestimmten zurückliegenden und/oder vorausliegenden geschätzten Trajektorie des einen oder der mehreren vorausfahrenden Fahrzeuge (10B, 10C), einer Anzahl von Messpunkten und/oder einer Erfassung eines Fahrtrichtungswechselsignals des einen oder der mehreren vorausfahrenden Fahrzeuge (10B, 10C) bestimmt ist; und/oder
das vierte Gewicht basierend auf einem Abstand zwischen dem Führungsfahrzeug (10C) und einem dem Führungsfahrzeug (10C) direkt vorausfahrenden Fahrzeug (10B), einer Größe eines durch das direkt vorausfahrenden Fahrzeug (10B) unverdeckten Sichtbereichs eines Spurmarkierungserfassungssystems (12) des Führungsfahrzeugs (10C), einer erfassten Länge der Spurmarkierungen und/oder einem erfassten Vorhandensein der Spurmarkierungen bestimmt ist.

13. Verfahren nach einem der vorherigen Ansprüche, ferner aufweisend:
Anwenden einer Koordinatentransformation auf die vierten Spurdaten, die sich auf das Führungsfahrzeug (10C) beziehen, zum Abgleich mit den ersten, zweiten und dritten Spurdaten, die sich auf das Folgefahrzeug (10A) beziehen.

14. Verfahren nach einem der vorherigen Ansprüche, wobei:
der Spurverlauf, die ersten Spurdaten, die zweiten Spurdaten und/oder die dritten Spurdaten von dem Folgefahrzeug (10A) bestimmt werden; und/oder
die vierten Spurdaten von dem Führungsfahrzeug (10C) oder dem Folgefahrzeug (10A) bestimmt werden; und/oder
die vierten Spurdaten mittels einer Fahrzeug-zu-Fahrzeug-Kommunikation von dem Führungsfahrzeug (10C) zu dem Folgefahrzeug (10A) übertragen werden.

15. Kraftfahrzeug (10), vorzugsweise Nutzfahrzeug, mit einer Steuereinheit (22), die zum Ausführen eines Verfahrens nach einem der vorherigen Ansprüche ausgebildet ist, wobei das Kraftfahrzeug (10) ferner optional aufweist:
ein Navigationssystem (18) mit den Karteninformationen; und/oder
ein satellitengestütztes Positionsbestimmungssystem (16) zur Bestimmung einer Position des Kraftfahrzeugs (10); und/oder
ein, vorzugsweise kameragestütztes, Spurmarkierungserfassungssystem (12) zur Erfassung von Spurmarkierungen und/oder unmarkierter Fahrbahnbegrenzungen auf einer Fahrbahn; und/oder
ein, vorzugsweise kameragestütztes, radargestütztes, lidargestütztes und/oder satellitenpositionsbestimmungsgestütztes, Objektverfolgungserfassungssystem (14) zur Verfolgungserfassung eines oder mehrerer vorausfahrender Fahrzeuge (10B, 10C); und/oder
eine Kommunikationsschnittstelle (20) zur Fahrzeug-zu-Fahrzeug-Kommunikation mit dem Führungsfahrzeug (10C).

## Claims

1. Method for the automatic transverse guidance of a following vehicle (10A) in a vehicle platoon (30), comprising;
determining first lane data from map information and position information of the following vehicle (10A);
determining second lane data from a detection of lane markings by the following vehicle (10A);
determining third lane data from object tracking detection of one or more vehicles (10B, 10C), driving in front of the following vehicle (10A), of the vehicle platoon (30);
receiving fourth lane data from a detection of lane markings by a lead vehicle (10C) of the vehicle platoon (30) ;
determining a lane course on the basis of the first lane data, the second lane data, the third lane data and the fourth lane data; and
transverse guidance of the following vehicle (10A) on the basis of the determined lane course.

2. Method according to Claim 1, wherein:
the first lane data are determined as a mathematical model in the form of a first lane course hypothesis, preferably in the form of a mathematical polynomial and/or of a clothoid model; and/or
the second lane data are determined as a mathematical model in the form of a second lane course hypothesis, preferably in the form of a mathematical polynomial and/or of a clothoid model; and/or
the third lane data are determined as a mathematical model in the form of a third lane course hypothesis, preferably in the form of a mathematical polynomial and/or of a clothoid model; and/or
the fourth lane data are determined as a mathematical model in the form of a fourth lane course hypothesis, preferably in the form of a mathematical polynomial and/or of a clothoid model; and/or
the lane course is determined as a mathematical model in the form of a lane course hypothesis, preferably in the form of a mathematical polynomial and/or of a clothoid model.

3. Method according to Claim 1 or Claim 2, wherein:
depending on the availability of the lane data, one, two, three or all of the first lane data, the second lane data, the third lane data and the fourth lane data are taken into account in order to determine the lane course; and/or
the determined lane course is used as a target trajectory for automatic transverse guidance of the following vehicle (10A).

4. Method according to one of the preceding claims, wherein determining the first lane data comprises:
locating the following vehicle (10A) on a map by way of a satellite-assisted position determination system (16) and/or of a navigation system (18) of the following vehicle (10A); and/or
determining a traffic lane of the following vehicle (10A) and/or a position of the following vehicle (10A) in the traffic lane from the map information and the position information of the following vehicle (10A).

5. Method according to one of the preceding claims, wherein determining the second lane data comprises:
detecting lane markings and/or unmarked road boundaries by way of a camera-assisted lane marking detection system (12) of the following vehicle (10A); and/or
applying image recognition in order to recognize lane markings and/or unmarked road boundaries on one or more recordings, captured by a lane marking detection system (12) of the following vehicle (10A), of preferably upcoming surroundings of the following vehicle (10A).

6. Method according to one of the preceding claims, wherein determining the third lane data comprises:
performing object tracking detection by way of object recognition of a preferably sensor-fused, camera-assisted, lidar-assisted, radar-assisted and/or satellite position determination-assisted object tracking detection system (14) of the following vehicle (10A); and/or
determining a previous and/or future estimated trajectory of the one or more vehicles (10B, 10C) driving in front; and/or
detecting a transverse movement and/or a change of direction indication from the one or more vehicles (10B, 10C) driving in front.

7. Method according to one of the preceding claims, wherein determining the fourth lane data comprises:
detecting lane markings and/or unmarked road boundaries by way of a camera-assisted lane marking detection system (12) of the lead vehicle (10C); and/or
applying image recognition in order to recognize lane markings and/or unmarked road boundaries on one or more recordings, captured by a lane marking detection system (12) of the lead vehicle (10C), of preferably upcoming surroundings of the lead vehicle (10C).

8. Method according to one of the preceding claims, wherein:
the lane course is determined as a fused lane course from the first lane data, the second lane data, the third lane data and/or the fourth lane data.

9. Method according to one of the preceding claims, wherein:
the first lane data, the second lane data, the third lane data and/or the fourth lane data are each weighted with a weight in order to determine the lane course, and/or
a first weight for the first lane data, a second weight for the second lane data, a third weight for the third lane data and/or a fourth weight for the fourth lane data is changeable or unchangeable.

10. Method according to Claim 9, wherein:
the first weight, the second weight, the third weight and/or the fourth weight is determined by covariance matrices of the filters that are respectively used in order to determine the respective lane data, such as for example Kalman filters; and/or
the first weight, the second weight, the third weight and/or the fourth weight is determined on the basis of a determined quality of the respective determination of the first lane data, of the second lane data, of the third lane data and/or of the fourth lane data.

11. Method according to Claim 9 or Claim 10, wherein:
the first weight is determined on the basis of a number of available satellites, of a reported integrity of the determined position data of the following vehicle (10A), of an availability of a differential global positioning system and/or of a resolution of the map information; and/or
the second weight is determined on the basis of a distance between the following vehicle (10A) and a vehicle (10B), driving directly in front of the following vehicle (10A), of the vehicle platoon (30), of a size of a field of view, not covered by the vehicle (10B) driving directly in front, of a lane marking detection system (12) of the following vehicle (10A), of a detected length of the lane markings and/or of a detected presence of the lane markings.

12. Method according to one of Claims 9 to 11, wherein:
the third weight is determined on the basis of a number of evaluated systems, of a length of a determined previous and/or future estimated trajectory of the one or more vehicles (10B, 10C) driving in front, of a number of measurement points and/or of a detection of a change of direction signal from the one or more vehicles (10B, 10C) driving in front; and/or
the fourth weight is determined on the basis of a distance between the lead vehicle (10C) and a vehicle (10B) driving directly in front of the lead vehicle (10C), of a size of a field of view, not covered by the vehicle (10B) driving directly in front, of a lane marking detection system (12) of the lead vehicle (10C), of a detected length of the lane markings and/or of a detected presence of the lane markings.

13. Method according to one of the preceding claims, furthermore comprising:
applying a coordinate transformation to the fourth lane data that relate to the lead vehicle (10C) for comparison with the first, second and third lane data that relate to the following vehicle (10A).

14. Method according to one of the preceding claims, wherein:
the lane course, the first lane data, the second lane data and/or the third lane data are determined by the following vehicle (10A); and/or
the fourth lane data are determined by the lead vehicle (10C) or the following vehicle (10A); and/or
the fourth lane data are transmitted from the lead vehicle (10C) to the following vehicle (10A) by way of vehicle-to-vehicle communication.

15. Motor vehicle (10), preferably utility vehicle, having a control unit (22) that is designed to execute a method according to one of the preceding claims, wherein the motor vehicle (10) furthermore optionally has:
a navigation system (18) containing the map information; and/or
a satellite-assisted position determination system (16) for determining a position of the motor vehicle (10); and/or
a preferably camera-assisted lane marking detection system (12) for detecting lane markings and/or unmarked road boundaries on a road; and/or
a preferably camera-assisted, radar-assisted, lidar-assisted and/or satellite position determination-assisted object tracking detection system (14) for the tracking detection of one or more vehicles (10B, 10C) driving in front; and/or
a communication interface (20) for vehicle-to-vehicle communication with the lead vehicle (10C).

## Revendications

1. Procédé de guidage transversal automatique d'un véhicule suiveur (10A) dans un peloton de véhicules (30), présentant les étapes consistant à :
déterminer des premières données de voie à partir d'informations cartographiques et d'informations de position du véhicule suiveur (10A) ;
déterminer des deuxièmes données de voie à partir d'une acquisition de marquages au sol par le véhicule suiveur (10A) ;
déterminer des troisièmes données de voie à partir d'une acquisition de suivi d'objet d'un ou de plusieurs véhicules (10B, 10C) du peloton de véhicules (30) qui précède(nt) le véhicule suiveur (10A) ;
recevoir des quatrièmes données de voie à partir d'une acquisition de marquages au sol par un véhicule de tête (10C) du peloton de véhicules (30) ;
déterminer d'un tracé de voie sur la base des premières données de voie, des deuxièmes données de voie, des troisièmes données de voie et des quatrièmes données de voie ; et
guider transversalement le véhicule suiveur (10A) sur la base du tracé de voie déterminé.

2. Procédé selon la revendication 1, dans lequel :
les premières données de voie sont déterminées comme un modèle mathématique sous la forme d'une première hypothèse de tracé de voie, de préférence sous la forme d'un polynôme mathématique et/ou d'un modèle de clothoïde ; et/ou
les deuxièmes données de voie sont déterminées comme un modèle mathématique sous la forme d'une deuxième hypothèse de tracé de voie, de préférence sous la forme d'un polynôme mathématique et/ou d'un modèle de clothoïde ; et/ou
les troisièmes données de voie sont déterminées comme un modèle mathématique sous la forme d'une troisième hypothèse de tracé de voie, de préférence sous la forme d'un polynôme mathématique et/ou d'un modèle de clothoïde ; et/ou
les quatrièmes données de voie sont déterminées comme un modèle mathématique sous la forme d'une quatrième hypothèse de tracé de voie, de préférence sous la forme d'un polynôme mathématique et/ou d'un modèle de clothoïde ; et/ou
le tracé de voie est déterminé comme un modèle mathématique sous la forme d'une hypothèse de tracé de voie, de préférence sous la forme d'un polynôme mathématique et/ou d'un modèle de clothoïde.

3. Procédé selon la revendication 1 ou 2, dans lequel :
pour la détermination du tracé de voie, selon la disponibilité des données de voie, un, deux, trois ou tous les éléments parmi les premières données de voie, les deuxièmes données de voie, les troisièmes données de voie et les quatrièmes données de voie est/sont pris en compte ; et/ou
le tracé de voie déterminé est utilisé comme trajectoire de consigne pour un guidage transversal automatisé du véhicule suiveur (10A).

4. Procédé selon l'une quelconque des revendications précédentes, dans lequel la détermination des premières données de voie présente :
la localisation du véhicule suiveur (10A) sur une carte au moyen d'un système de détermination de position assisté par satellite (16) et/ou d'un système de navigation (18) du véhicule suiveur (10A) ; et/ou
la détermination d'une voie de circulation du véhicule suiveur (10A) et/ou d'une position du véhicule suiveur (10A) sur la voie de circulation à partir des informations cartographiques et des informations de position du véhicule suiveur (10A).

5. Procédé selon l'une quelconque des revendications précédentes, dans lequel la détermination des deuxièmes données de voie présente :
l'acquisition de marquages au sol et/ou de limites de chaussée non balisées, au moyen d'un système d'acquisition de marquages au sol assisté par caméra (12) du véhicule suiveur (10A) ; et/ou
l'application d'une reconnaissance d'image, pour reconnaître des marquages au sol et/ou des limites de chaussée non balisées, à une ou plusieurs prises de vue, acquises par un système d'acquisition de marquages au sol (12) du véhicule suiveur (10A), d'un environnement du véhicule suiveur (10A), de préférence à venir.

6. Procédé selon l'une quelconque des revendications précédentes, dans lequel la détermination des troisièmes données de voie présente :
l'exécution de l'acquisition de suivi d'objet au moyen d'une reconnaissance d'objet d'un système d'acquisition de suivi d'objet (14) du véhicule suiveur (10A), de préférence à fusion de capteurs, assisté par caméra, assisté par lidar, assisté par radar et/ou assisté par une détermination de position par satellite ; et/ou
la détermination d'une trajectoire estimée passée et/ou à venir dudit un ou des plusieurs véhicules (10B, 10C) qui précède(nt) ; et/ou
l'acquisition d'un mouvement transversal et/ou d'un affichage de sens de la marche dudit un ou des plusieurs véhicules (10B, 10C) qui précède(nt).

7. Procédé selon l'une quelconque des revendications précédentes, dans lequel la détermination des quatrièmes données de voie présente :
l'acquisition de marquages au sol et/ou de limites de chaussée non balisées au moyen d'un système d'acquisition de marquages au sol assisté par caméra (12) du véhicule de tête (10C) ; et/ou
l'application d'une reconnaissance d'image, pour reconnaître des marquages au sol et/ou des limites de chaussée non balisées, à une ou plusieurs prises de vue, acquises par un système d'acquisition de marquages au sol (12) du véhicule de tête (10C), d'un environnement du véhicule de tête (10C), de préférence à venir.

8. Procédé selon l'une quelconque des revendications précédentes, dans lequel :
le tracé de voie est déterminé comme un tracé de voie fusionné à partir des premières données de voie, des deuxièmes données de voie, des troisièmes données de voie et/ou des quatrièmes données de voie.

9. Procédé selon l'une quelconque des revendications précédentes, dans lequel :
les premières données de voie, les deuxièmes données de voie, les troisièmes données de voie et/ou les quatrièmes données de voie sont respectivement pondérées par un poids pour déterminer le tracé de voie, et/ou
un premier poids pour les premières données de voie, un deuxième poids pour les deuxièmes données de voie, un troisième poids pour les troisièmes données de voie et/ou un quatrième poids pour les quatrièmes données de voie sont variables ou invariables.

10. Procédé selon la revendication 9, dans lequel :
le premier poids, le deuxième poids, le troisième poids et/ou le quatrième poids sont déterminés par des matrices de covariance des filtres utilisés respectivement pour déterminer les données de voie respectives, comme par exemple un filtre de Kalman ; et/ou
le premier poids, le deuxième poids, le troisième poids et/ou le quatrième poids sont déterminés sur la base d'une qualité déterminée de la détermination respective des premières données de voie, des deuxièmes données de voie, des troisièmes données de voie et/ou des quatrièmes données de voie.

11. Procédé selon la revendication 9 ou 10, dans lequel :
le premier poids est déterminé sur la base d'un nombre de satellites disponibles, d'une intégrité confirmée des données de position déterminées du véhicule suiveur (10A), d'une disponibilité d'un système de positionnement global différentiel et/ou d'une résolution des informations cartographiques ; et/ou
le deuxième poids est déterminé sur la base d'une distance entre le véhicule suiveur (10A) et un véhicule (10B) du peloton de véhicules (30) qui précède directement le véhicule suiveur (10A), d'une taille d'un champ de vision d'un système d'acquisition de marquages au sol (12) du véhicule suiveur (10A), non masqué par le véhicule (10B) qui précède directement, d'une longueur acquise des marquages au sol et/ou d'une présence acquise des marquages au sol.

12. Procédé selon l'une quelconque des revendications 9 à 11, dans lequel :
le troisième poids est déterminé sur la base d'un nombre de systèmes évalués, d'une longueur d'une trajectoire estimée passée et/ou à venir déterminée dudit un ou des plusieurs véhicules (10B, 10C) qui précèdent, d'un nombre de points de mesure et/ou d'une acquisition d'un signal de changement de sens de la marche dudit un ou des plusieurs véhicules (10B, 10C) qui précèdent ; et/ou
le quatrième poids est déterminé sur la base d'une distance entre le véhicule de tête (10C) et un véhicule (10B) qui précède directement le véhicule de tête (10C), d'une taille d'un champ de vision d'un système d'acquisition de marquages au sol (12) du véhicule de tête (10C), non masqué par le véhicule (10B) qui précède directement, d'une longueur acquise des marquages au sol et/ou d'une présence acquise des marquages au sol.

13. Procédé selon l'une quelconque des revendications précédentes, présentant en outre :
l'application d'une transformation de coordonnées aux quatrièmes données de voie qui concernent le véhicule de tête (10C) pour un rapprochement avec les premières, les deuxièmes et les troisièmes données de voie qui concernent le véhicule suiveur (10A).

14. Procédé selon l'une quelconque des revendications précédentes, dans lequel :
le tracé de voie, les premières données de voie, les deuxièmes données de voie et/ou les troisièmes données de voie sont déterminés par le véhicule suiveur (10A) ; et/ou
les quatrièmes données de voie sont déterminées par le véhicule de tête (10C) ou le véhicule suiveur (10A) ; et/ou
les quatrièmes données de voie sont transmises du véhicule de tête (10C) au véhicule suiveur (10A) au moyen d'une communication de véhicule à véhicule.

15. Véhicule automobile (10), de préférence véhicule utilitaire, comprenant une unité de commande (22) qui est réalisée pour exécuter un procédé selon l'une quelconque des revendications précédentes, le véhicule automobile (10) présentant en outre en option :
un système de navigation (18) avec les informations cartographiques ; et/ou
un système de détermination de position assisté par satellite (16) pour déterminer une position du véhicule automobile (10) ; et/ou
un système d'acquisition de marquages au sol (12), de préférence assisté par caméra, pour acquérir des marquages au sol et/ou des limites de chaussée non balisées sur une chaussée ; et/ou
un système d'acquisition de suivi d'objet (14), de préférence assisté par caméra, assisté par radar, assisté par lidar et/ou assisté par une détermination de position par satellite, pour l'acquisition de suivi d'un ou de plusieurs véhicules (10B, 10C) qui précèdent ; et/ou
une interface de communication (20) pour la communication de véhicule à véhicule avec le véhicule de tête (10C).
